# EUROPÄISCHE PATENTSCHRIFT

(11) **EP 0 544 985 B1**
(45) Veröffentlichungstag und Bekanntmachung des Hinweises auf die Patenterteilung: **27.03.1996**
(21) Anmeldenummer: 92111258.7
(22) Anmeldetag: 02.07.1992
(51) Int. Cl.: F01P 7/16, G05D 23/19

(54) **Temperaturregeleinrichtung für das Kühlmittel von Brennkraftmaschinen**
Temperature control device for the coolant of an internal combustion engine
Dispositif de régulation de température pour les moyens de refroidissement d'un moteur à combustion interne

(30) Priorität: 05.12.1991 DE 9115114 U
(43) Veröffentlichungstag der Anmeldung: 09.06.1993
(73) Patentinhaber: Gustav Wahler GmbH u. Co, D-73730 Esslingen (DE)
(72) Erfinder: Wahler, Dieter, Dipl.-Ing., W-7300 Esslingen (DE)
(74) Vertreter: Kratzsch, Volkhard, Dipl.-Ing.

(56) Entgegenhaltungen:
- DE-A- 2 943 091
- DE-B- 1 209 362
- GB-A- 2 155 153
- US-A- 4 337 733

## Beschreibung

Die Erfindung bezieht sich auf eine Temperaturregeleinrichtung für das Kühlmittel von Brennkraftmaschinen der im Oberbegriff des Anspruchs 1 definierten Art.

Bei einer bekannten Temperaturregeleinrichtung dieser Art (DE-GM 87 02 534) ist der Sensor in die Vorlaufleitung oder alternativ in die Rücklaufleitung unmittelbar eingeschaltet. Dies hat sich bewährt, macht aber mitunter Schwierigkeiten, weil nicht überall ausreichender Platz für die direkte Anordnung in dieser Leitung vorhanden ist. Auch die etwaige spätere Umrüstung oder Nachrüstung macht im einen oder anderen Fall Probleme.

Der Erfindung liegt die Aufgabe zugrunde, eine Temperaturregeleinrichtung der im Oberbegriff des Anspruchs 1 genannten Art so auszubilden, daß ein vereinfachter Anschluß an den Kühlkreislauf und eine größere Freizügigkeit für die Anordnung des Stellmotors mit Sensor erreicht ist, wobei eine schnelle Änderung des Regelverhaltens des Ventils und damit der Regelung der Kühlmitteltemperatur, die mit einfachen Mitteln erreicht ist, beibehalten wird.

Die Aufgabe ist bei einer Temperaturregeleinrichtung der im Oberbegriff des Anspruchs 1 genannten Art gemäß der Erfindung durch die Merkmale im Kennzeichnungsteil des Anspruchs 1 gelöst. Dadurch, daß mittels des Sensors des Stellmotors die Kühlmitteltemperatur in einer separaten Leitung erfaßt wird, die als Nebenstromleitung der Vorlaufleitung oder der Rücklaufleitung ausgebildet ist und von dieser abzweigt, ist die Gestaltung vereinfacht. Eine derartige Abzweigleitung kann ohne Schwierigkeiten, auch nachträglich noch, angeschlossen werden und, insbesondere in flexibler Ausbildung, zu beliebigen Stellen geführt werden, wo sich der Stellmotor mit integriertem Sensor, insbesondere ein thermostatisch arbeitendes Betätigungselement als Stellmotor, befindet.

Weitere vorteilhafte Ausführungsformen dieser Temperaturregeleinrichtung gemäß der Erfindung ergeben sich aus den Ansprüchen 2 bis 10. Weitere Einzelheiten und Vorteile der Erfindung ergeben sich aus der nachfolgenden Beschreibung.

Die Erfindung ist nachfolgend anhand eines in der Zeichnung gezeigten Ausführungsbeispieles näher erläutert. Es zeigen:
- Fig. 1: eine schematische Seitenansicht von Teilen einer Brennkraftmaschine mit einer Temperaturregeleinrichtung in schematischer Darstellung,
- Fig. 2: einen schematischen Schnitt des temperaturabhängig arbeitenden Betätigungselements der Regeleinrichtung.

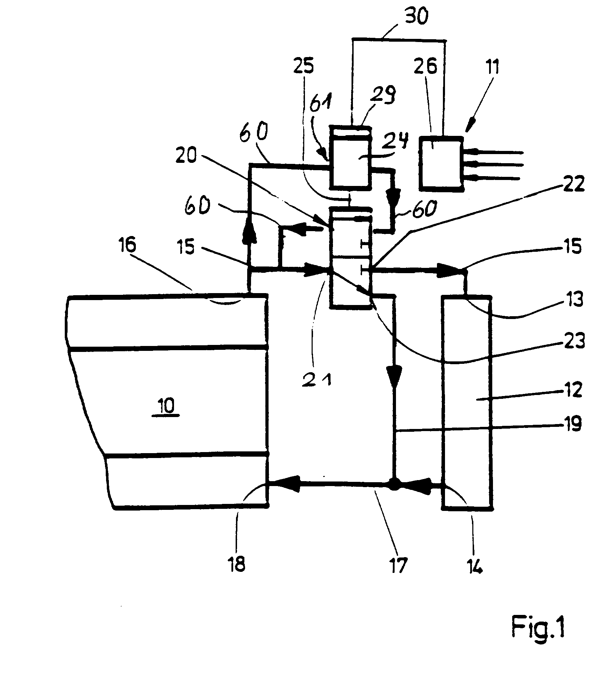

In Fig. 1 ist schematisch eine Brennkraftmaschine 10 mit Temperaturregeleinrichtung 11 gezeigt, die einen Kühler 12 mit Zulauf 13 und Auslauf 14 für das Kühlmittel aufweist. Der Zulauf 13 ist über eine Vorlaufleitung 15 mit dem Brennkraftmaschinen-Austritt 16 und der Auslauf 14 über eine Rücklaufleitung 17 mit dem Brennkraftmaschinen-Eintritt 18 verbunden. Zwischen der Vorlaufleitung 15 und der Rücklaufleitung 17 verläuft eine beide verbindende Bypaßleitung 19.

Die Temperaturregeleinrichtung 11 weist in der Vorlaufleitung 15 und zugleich der Bypaßleitung 19 ein Ventil 20 auf, das aus einem üblichen Ventil bestehen kann, dessen Ventilverschlußglied zur wechselweisen Steuerung der Vorlaufleitung 15 und/oder der Bypaßleitung 19 ausgebildet ist. Das Ventil 20 weist in üblicher Weise z.B. in einem Gehäuse zwei gleichachsig angeordnete Ventilverschlußglieder auf, die jeweils eine zugeordnete Ventilöffnung beherrschen. Für das Ventil 20 ist der Einfachheit halber in der Zeichnung ein der Pneumatik entlehntes Schaltbild verwendet worden. Das Ventil 20 hat einen Einlaß 21 und Auslaß 22, die beide in der Vorlaufleitung 15 sitzen und diese je nach Schaltstellung mehr oder weniger durchgängig machen. Ferner hat das Ventil 20 einen Bypaßanschluß 23, mit dem es an die Bypaßleitung 19 angeschlossen ist.

Bei kalter Brennkraftmaschine 10 ist der Durchlaß in der Vorlaufleitung 15 gesperrt, wie gezeigt, und lediglich das den Kurzschluß herstellende Ventilverschlußglied des Ventils 20 offen. Das von der Brennkraftmaschine 10 kommende Kühlmittel passiert die Vorlaufleitung 15 und wird vom Ventil 20 über den Einlaß 21 und den Bypaßanschluß 23 zur Bypaßleitung 19 und von dort zurück zum Brennkraftmaschinen-Eintritt 18 geleitet.

Bei einem als normales thermostatisches Ventil ausgebildeten Ventil 20 wird dieses dann von der gezeigten Stellung in die andere umgeschaltet, wenn das Kühlmittel in der Vorlaufleitung 15 die Öffnungstemperatur dieses Thermostatventiles erreicht hat. Dann wird der Kurzschlußweg über die Bypaßleitung 19 gesperrt und der Durchlaß in der Vorlaufleitung 15 zum Kühler 12 hin freigegeben. Sinkt die Kühlmitteltemperatur unter die Ansprechtemperatur ab, so wird das Ventil 20 wieder in die gezeigte Stellung zurückgestellt. Je nach augenblicklicher Kühlmitteltemperatur in der Vorlaufleitung 15 können sich auch Mischstellungen zwischen den beiden erläuterten Stellungen ergeben. Insoweit ist ein Kühlmittelkreislauf für Brennkraftmaschinen bekannt.

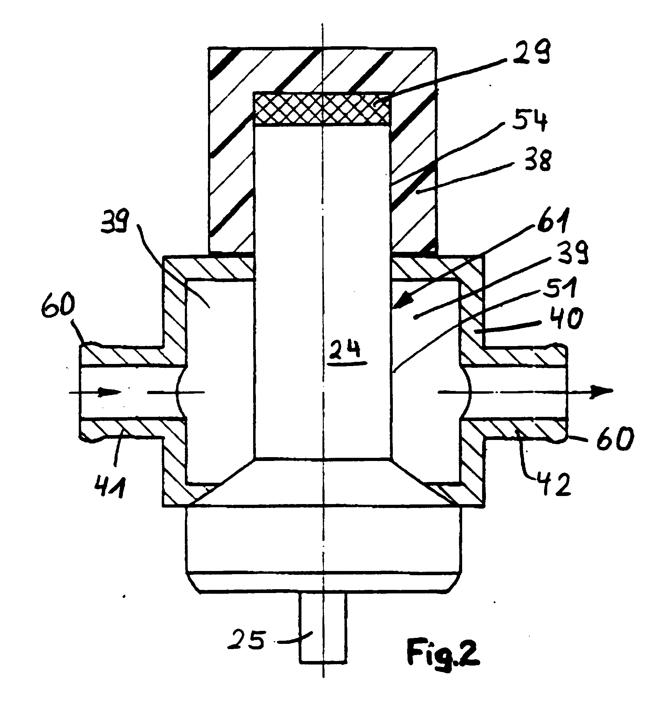

Die Besonderheit der Temperaturregeleinrichtung 11 liegt darin, daß das Ventil 20 von außen über einen Stellmotor 24 betätigt wird. Der Stellmotor 24 ist in Fig. 1 nur schematisch angedeutet, ebenso dessen Stellorgan 25 an dessen Ausgang, das getrieblich mit dem nicht sichtbaren Ventilverschlußglied des Ventils 20 verbunden ist. Dem Stellmotor 24 ist eine diesen steuernde Steuereinrichtung 26 zugeordnet. Der Steuereinrichtung 26 können einzelne, beispielsweise von Sensoren der Brennkraftmaschine 10 erfaßte, Kennfeldgrößen zugeführt werden. Diese einzelnen Kennfeldgrößen sollen in Fig. 1 bei der Steuereinrichtung 26 durch Eingangspfeile verdeutlicht sein. Als Kennfeldgrößen kommen z.B. die in der Vorlaufleitung 15 erfaßte Kühlmitteltemperatur, ferner z.B. die Außentemperatur und/oder die Abgastemperatur und/oder die Drehzahl und/oder das Drehmoment der Brennkraftmaschine 10 und/oder der Unterdruck im Saugrohr und/oder eine Druckdifferenz in eine Unterdruckdose und/oder die Öltemperatur od.dergl. weitere, maschinenseitige Kennfeldgrößen in Betracht. Die Erfassung der Kühlmitteltemperatur in der Vorlaufleitung 15 oder alternativ dazu in der Rücklaufleitung 17 erfolgt über einen Sensor des Stellmotors 24, der in Fig. 1 und 2 als in den Stellmotor 24 integriertes Element vereinfacht dargestellt ist.

Erreicht die Kühlmitteltemperatur in der Vorlaufleitung 15 einen Wert, der über einem vorgegebenen Wert liegt, so wird über den Sensor der Stellmotor 24 zu einer Verstellung des Ventils 20 aus der gezeigten Stellung in eine andere veranlaßt, wodurch der Durchgang durch die Vorlaufleitung 15 zum Kühler 12 hin freigegeben wird und das Kühlmittel den Kühler 12 passieren und gekühlt werden kann.

Der Sensor des Stellmotors 24 ist mit einer schematisch angedeuteten Heizeinrichtung 29 versehen. Diese kann in das Innere des Sensors integriert sein oder sie ist, wie gezeigt, als äußere Heizeinrichtung 29 ausgebildet und außen auf den Sensor, der in den Stellmotor 24 integriert ist, aufgesetzt. Die Heizeinrichtung 29 ist über eine Steuerleitung 30 mit der Steuereinrichtung 26 verbunden, über die in Abhängigkeit maschinenseitiger oder sonstiger Kennfeldgrößen bedarsweise die Einschaltung oder Abschaltung der Heizeinrichtung 29 erfolgt.

Mittels der Temperaturregeleinrichtung 11 gemäß Fig. 1 läßt sich eine Temperaturregelung des Kühlmittels wie folgt durchführen. Man kann in Abhängigkeit einzelner Kennfeldgrößen, und zwar solche der Brennkraftmaschine 10 und/oder weitere äußere Parameter, den mit der Kühlmitteltemperatur in der Vorlaufleitung 15 beaufschlagten, diese Temperatur erfassenden Sensor als Teil des Stellmotors 24 bei Einschaltung der Heizeinrichtung 29 einer Fremderhitzung aussetzen.

Daraufhin wird der Stellmotor 24 und über diesen das Ventil 20 in dem Sinne betätigt, daß eine Absenkung der Kühlmitteltemperatur in der Vorlaufleitung 15 erfolgt. Dies wird durch stärkeres Schließen im Bereich des Bypaßanschlusses 23 und verstärktes Öffnen im Bereich des Einlasses 21 und Auslasses 22 derart erreicht, daß über die Rücklaufleitung 17 stärker herabgekühltes Kühlmittel in die Brennkraftmaschine 10 zurückfließt. Solange die Heizeinrichtung 29 eingeschaltet ist, wird dieser Zustand aufrechterhalten. Sobald die Steuereinrichtung 26 über die Steuerleitung 30 die Abschaltung der Heizeinrichtung 29 bewirkt, wird der zuvor erhitzte Sensor des Stellmotors 24 durch den demgegenüber kälteren Kühlmittelstrom aus der Vorlaufleitung 15 sehr schnell wieder abgekühlt. Man nutzt also hier zur selbsttätigen Abkühlung des Sensors des Stellmotors 24 die Tatsache aus, daß in der Vorlaufleitung 15 ein Kühlmittel fließt, das meist deutlich geringere Temperaturen als die Ansprechtemperatur führt, die durch die Einschaltung der Heizeinrichtung 29 vorgegeben ist.

Die außen am Sensor des Stellmotors 24 angeordnete Heizeinrichtung 29 befindet sich auf einem Bereich, der nicht mit dem Kühlmittel in Berührung gelangt. Die Heizeinrichtung 29 weist z.B. ein nicht besonders dargestelltes elektrisches Heizelement auf, z.B. eine elektrische Heizwicklung, eine PTC-Element od.dergl., das außen auf den im Stellmotor 24 integrierten Sensor aufgesetzt ist.

Insbesondere aus Fig. 2 ist ersichtlich, daß der in den Stellmotor 24 integrierte Sensor mit letzterem zu einem einzigen temperaturabhängig arbeitenden Betätigungselement 61 vereinigt ist, das z.B. als übliches Dehnstoffelement ausgebildet ist. Innerhalb eines nach außen abgeschlossenen Gehäuses 51 ist ein bei Erwärmung sich ausdehnender Dehnstoff, z.B. Wachs, enthalten. In diesen Dehnstoff taucht ein das Stellorgan 25 bildender Kolben ein,der über eine Rückstellfeder im Betätigungselement 61 und/oder eine äußere, nicht gezeigte Rückstellfeder in das Gehäuse 51 hineingezwungen ist. Dehnt sich der Dehnstoff im Gehäuse 51 bei Temperaturerhöhung und Erreichen der Ansprechtemperatur des Dehnstoffes aus, so wird darüber der das Stellorgan 25 bildende Kolben aus dem Gehäuse 51 gegen die Wirkung der Rückstellfeder in Fig. 2 nach unten herausgeschoben. Dadurch wird der mit dem Stellorgan 25 getrieblich gekoppelte, dazu insbesondere koaxiale Teil, z.B. eine Ventilstange, des Ventils 20 in gleicher Richtung verstellt, so daß dadurch das Ventil 20 in einem entsprechenden Maße geöffnet wird. Kühlt der Dehnstoff im Gehäuse 51 wieder ab, hat dies eine Volumenreduzierung zur Folge, so daß das Stellorgan 25 von der Rückstellfeder gegensinnig wieder in das Gehäuse 51 eingeschoben wird, mit einhergehender Zurückverstellung des davon betätigten Teils des Ventils 20.

Wie insbesondere aus Fig. 1 ersichtlich ist, ist mittels des in den Stellmotor 24 integrierten Sensors die Kühlmitteltemperatur, die in der Vorlaufleitung 15 oder statt dessen in der Rücklaufleitung 17 herrscht, in einer separaten Leitung 60 erfaßbar, die als Nebenstromleitung der Vorlaufleitung 15 oder alternativ dazu der Rücklaufleitung 17 ausgebildet ist und von dieser abzweigt. Dadurch ist eine besondere Vereinfachung erzielt, weil auf diese Weise der Stellmotor 24 mitsamt darin integriertem Sensor praktisch an jeder beliebigen Stelle angeordnet werden kann und diesem in einfacher Weise in Form einer z.B. flexiblen Leitung 60, die einen Bypaß zur Vorlaufleitung 15 oder alternativ zur Rücklaufleitung 17 bildet, das Kühlmittel mit der in der Vorlaufleitung 15 bzw. Rücklaufleitung 17 herrschenden Temperatur zugeführt werden kann. Eine derartige separate Leitung 60 kann jederzeit als Bypaßleitung an die Vorlaufleitung 15 oder Rücklaufleitung 17 angeschlossen und zu irgend einer Stelle im Bereich eines Fahrzeuges geführt werden, wo Platz für die dortige Anordnung des Stellmotors 24 mit integriertem Sensor ist. Dabei wird der Stellmotor 24 mitsamt dem integrierten Sensor, insbesondere das temperaturabhängig arbeitende Betätigungselement 61, so angeordnet, daß es sich mit einem Teil seines Gehäuses 51 und des Inneren dieses, der einen Fühlteil bildet, innerhalb dieser separaten Leitung 60 befindet. Der übrige Teil 54 dieses Fühlteiles ist hingegen außerhalb der separaten Leitung 60 angeordnet, wobei auf diesem Teil 54 die beschriebene äußere Heizeinrichtung 29 angeordnet ist, die über die Steuerleitung 30 eingeschaltet und gespeist wird.

Aus Fig. 2 ist ersichtlich, daß für das temperaturabhängig arbeitende Betätigungselement 61 ein Gehäuse 40 vorgesehen ist, in dem das Betätigungselement 61 zumindest mit einem Teil seines Fühlteiles 51 gehalten ist, wobei der Innenraum des Gehäuses 40 mit der separaten Leitung 60 in Verbindung steht. Das Gehäuse 40 enthält einen Ringraum 39, der das Betätigungselement 61 zumindest auf einem Teil seines Fühlteiles 51 umgibt, wobei der Ringraum 39 mit der separaten Leitung 60 in Verbindung steht.

Der übrige, außerhalb der separaten Leitung 60 verlaufende Teil 54 des Fühlteiles 51 steht über das Gehäuse 40 hinaus nach außen vor und ist dort mit einer thermischen Isolierung 38 versehen, die z.B. etwa hutförmig ist und diesen Teil 54 komplett abdeckt. Die Heizeinrichtung 29, z.B. in Form eines PTC-Elements, ist innerhalb der thermischen Isolierung 38 und dabei vorzugsweise an der in Fig. 2 oberen Stirnseite des Betätigungselements 61 angeordnet. Das Gehäuse 40 ist mit einem Anschluß 41 für den Zufluß und mit einem gegenüberliegenden Anschluß 42 für den Abfluß des abgezweigten Kühlmittels versehen, wobei beide Anschlüsse 41, 42 an die separate Leitung 60 angeschlossen sind. Das Betätigungselement 61, vorzugsweise mit dem dieses aufnehmenden Gehäuse 40, kann z.B. koaxial zum davon betätigten Ventil 20 angeordnet sein.

Das Betätigungselement 61 ist z.B. auf eine Ansprechtemperatur von z.B. 80° C geeicht, die einer entsprechenden Ventilöffnungstemperatur entspricht. Dies bedeutet, daß bei nicht eingeschalteter Heizeinrichtung 29 das Betätigungselement 61 dann im Betätigungssinn anspricht, wenn die Temperatur des über die separate Leitung 60 abgezweigten und im Ringraum 39 den Fühlteil 51 umgebenden Kühlmittels die Ansprechtemperatur von 80° C erreicht hat. Soll hingegen für die Temperaturregeleinrichtung 11 eine niedrigere Ansprechtemperatur eingestellt werden, z.B. in der Größenordnung von 60° bis 70° C, so wird über die Steuereinrichtung 26 die Heizeinrichtung 29 angesteuert und eingeschaltet und auf diese Weise das Betigungselement 61 erhitzt, so daß es schon bei einer Kühlmitteltemperatur im Ringraum 39 in der Größenordnung von 60° bis 70° C seine Ansprechtemperatur erreicht und über das Stellorgan 25 das Ventil 20 entsprechend betätigt. Wird die Heizeinrichtung 29 ausgeschaltet, so wird das darüber zuvor erhitzte Betätigungselement 61 sehr schnell durch das in der separaten Leitung 60 abgezweigte und dieses im Ringraum 39 umströmende Kühlmittel, das demgegenüber eine geringere Temperatur hat, heruntergekühlt, so daß sich eine sehr schnelle Rückstellung des Betätigungselements 61 und damit des Ventils 20 ergibt.

Die Temperaturregeleinrichtung 11 ist einfach, leicht und kostengünstig. Sie ist in dieser Ausführung einbaufertig und kann auch als Austauschteil gehandelt und schnell und kostengünstig gegen ein vorhandenes Teil getauscht werden. Ein weiterer besonderer Vorteil liegt darin, daß diese Anordnung eine sehr schnelle Verstellung des Ventils 20 in Abhängigkeit irgendwelcher sonstiger Kenngrößen oder Parameter ermöglicht, wobei nicht zu befürchten ist, daß das Ventil 20 sich nach einer solchen Verstellung nur sehr langsam wieder in die Ausgangslage zurückverstellt. Da zur Rückführung des Betätigungselements 61 das Kühlmittel in der separaten Leitung 60 verwendet ist, ist eine sehr schnelle Rückkühlung und damit eine sehr schnelle Rückstellung des Ventils 20 gewährleistet. Dies ist insbesondere dann der Fall, wenn die separate Leitung 60 abweichend von Fig. 1 als Nebenstromleitung der Rücklaufleitung 17 ausgebildet ist.

## Patentansprüche

1. Temperaturregeleinrichtung für das Kühlmittel von Brennkraftmaschinen (10), mit einer von der Brennkraftmaschine (10) zum Kühler (12) führenden Vorlaufleitung (15), einer vom Kühler (12) zurück zur Brennkraftmaschine (10) führenden Rücklaufleitung (17) und einer beide Leitungen (15, 17) verbindenden Bypaßleitung (19), mit einem den Kühlmittelfluß von der Brennkraftmaschine (10) durch die Bypaßleitung (19) und/oder durch den Kühler (12) zurück zur Brennkraftmaschine (10) steuernden Ventil (20), dessen Ventilgehäuse an die Bypaßleitung (19), und an die Vorlaufleitung (15) oder die Rücklaufleitung (17) angeschlossen ist, und mit einem das Ventil (20) steuernden Stellmotor (24), der einen die Kühlmitteltemperatur in der Vorlaufleitung (15) oder Rücklaufleitung (17) erfassenden und davon beaufschlagbaren sowie mittels einer Heizeinrichtung (29) beheizbaren Sensor aufweist und mit dem Sensor zu einem temperaturabhängig arbeitenden Betätigungselement (61) zu einer Einheit vereinigt ist, das als Dehnstoffelement ausgebildet ist und ein Gehäuse (51) und innerhalb dieses Gehäuses (51) einen bei Erwärmung sich ausdehnenden Dehnstoff aufweist, in den ein bei Temperaturerhöhung des Dehnstoffes daraus ausschiebbarer Kolben (25) eintaucht,
**dadurch gekennzeichnet,**
daß ein Gehäuse (40) vorgesehen ist, in dem das Betätigungselement (61) zumindest mit einem Teil seines mit der Kühlmitteltemperatur beaufschlagbaren Fühlteiles (51) angeordnet ist und das mittels zweier Anschlüsse (41, 42) an eine separate Leitung (60) angeschlossen ist, die das Kühlmittel von der Vorlaufleitung (15) oder der Rücklaufleitung (17) abzweigt und dazu im Nebenstrom verläuft, daß das Gehäuse (40) einen Ringraum (39) enthält, der mit der separaten Leitung (60) in Verbindung steht und den zumindest einen Teil des mit der Kühlmitteltemperatur beaufschlagbaren Fühlteils (51) des Betätigungselements (61) umgibt, daß das Betätigungselement (61) mit einem nicht mit dem Kühlmittel beaufschlagbaren Teil (54) seines Fühlteiles (51) aus dem Gehäuse (40) heraus vorsteht und an diesem vorstehenden Teil (54) die Heizeinrichtung (29) angeordnet ist und daß der Sensor des Betätigungselements (61) bei Abschaltung der Heizeinrichtung (29) durch den demgegenüber kälteren Kühlmittelstrom in der separaten Leitung (60) und im Ringraum (39) des Gehäuses (40) abgekühlt wird.

2. Temperaturregeleinrichtung nach Anspruch 1,
**dadurch gekennzeichnet,**
daß der aus dem Gehäuse (40) vorstehende Teil (54) des Fühlteiles (51) des Betätigungselements (61) eine thermische Isolierung (38) aufweist.

3. Temperaturregeleinrichtung nach Anspruch 2,
**dadurch gekennzeichnet,**
daß der aus dem Gehäuse (40) vorstehende Teil (54) mitsamt der Heizeinrichtung (29) von dieser Isolierung (38) umschlossen ist.

4. Temperaturregeleinrichtung nach einem der Ansprüche 1 bis 3,
**dadurch gekennzeichnet,**
daß die Heizeinrichtung (29) mit einer Steuereinrichtung (26) in Verbindung steht und von der Steuereinrichtung (26) bedarfsweise in Abhängigkeit einzelner Kennfeldgrößen ein- und ausgeschaltet wird.

5. Temperaturregeleinrichtung nach einem der Ansprüche 1 bis 4,
**dadurch gekennzeichnet,**
daß der sich verschiebende Teil, z.B. Kolben (25), des Betätigungselements (61) mit dem Ventil (20), insbesondere einer Ventilstange dieses, verbunden ist und dieses translatorisch verschiebt.

6. Temperaturregeleinrichtung nach einem der Ansprüche 2 bis 5,
**dadurch gekennzeichnet,**
daß die Heizeinrichtung (29) innerhalb der thermischen Isolierung (38) und dabei vorzugsweise an der Stirnseite des Betätigungselements (61) angeordnet ist.

7. Temperaturregeleinrichtung nach einem der Ansprüche 1 bis 6,
**dadurch gekennzeichnet,**
daß das Betätigungselement (61) und/oder das dieses aufnehmende Gehäuse (40) koaxial zum Ventil (20) angeordnet ist.

8. Temperaturregeleinrichtung nach einem der Ansprüche 1 bis 7,
**dadurch gekennzeichnet,**
daß die Heizeinrichtung (29) ein elektrisches Heizelement, insbesondere ein Widerstandsheizelement, PTC-Element oder dergleichen, aufweist.

9. Temperaturregeleinrichtung nach einem der Ansprüche 1 bis 8,
**dadurch gekennzeichnet,**
daß der eine Anschluß (41) des Gehäuses (40) für den Zufluß und der andere Anschluß (42) für den Abfluß des abgezweigten Kühlmittels vorgesehen ist.

10. Temperaturregeleinrichtung nach einem der Ansprüche 1 bis 9,
**dadurch gekennzeichnet,**
daß das Ventil (20) als Thermostatventil ausgebildet ist.

## Claims

1. Temperature regulating device for the cooling agent of internal combustion engines (10), with a forward flow pipe (15) leading from the internal combustion engine (10) to the cooler (12), a backward flow pipe (17) leading from the cooler (12) back to the internal combustion engine (10) and a bypass pipe (19) connecting both pipes (15, 17), with a valve (20) controlling the flow of cooling agent from the internal combustion engine (10) through the bypass pipe (19) and/or through the cooler (12) back to the internal combustion engine (10), the housing of the valve being connected to the bypass pipe (19), and to the forward flow pipe (15) or the backward flow pipe (17), and with a control motor (24) controlling the valve (20), which control motor comprises a sensor detecting the temperature of the cooling agent in the forward flow pipe (15) or backward flow pipe (17) which sensor can be pressurised thereby and heated by a heating device (29) and is connected to form a single unit with the sensor to an activating element (61) that operating in dependency on the temperature, which element is designed as an extensible element and comprises a housing (51) with a material inside the housing (51) that expands on heating, into which material a piston (25) dips which can be pushed out when the temperature of the elastic material increases,
**characterised in that**
a housing (40) is provided, in which the activating element (61) at least with a part of its contact element (51) impingeable by the temperature of the cooling agent is arranged, which is connected to a separate pipe (60) by means of two connections (41, 42), which pipe diverts the cooling agent from the forward flow pipe (15) or the backward flow pipe (17) and also runs in a secondary flow, in that the housing (40) comprises an annular chamber (39) which is connected with the separate pipe (60) and surrounds at least part of the contact element (51) of the activating element (61) impingeable by the temperature of the cooling agent, in that the activating element (61) with part (54) of its contact element (51) not impingeable by the cooling agent protrudes out of the housing (40) and the heating device (29) is arranged on this protruding part (54), and in that the sensor of the activating element (61) when the heating device (29) is switched off is cooled down by the cooler cooling agent flow in the separate pipe (60) and in the annular chamber (39) of the housing (40).

2. Temperature regulating device according to Claim 1,
**characterised in that**
the part (54) of the contact element (51) of the activating element (61) protruding out of the housing (40) has thermal insulation (38).

3. Temperature regulating device according to Claim 2,
**characterised in that**
the part (54) protruding out of the housing (40) and the heating device (29) are enclosed by this insulation (38).

4. Temperature regulating device according to one of Claims 1 to 3,
**characterised in that**
the heating device (29) is connected to a control device (26) and is switched on and off by the control device (26) as necessary depending on individual identification field quantities.

5. Temperature regulating device according to one Claims of 1 to 4,
**characterised in that**
the sliding part, e.g. piston (25), of the activating element (61) is connected with the valve (20), in particular a valve rod thereof, and displaces it in a translatory manner.

6. Temperature regulating device according to one of Claims 2 to 5,
**characterised in that**
the heating device (29) is arranged inside the thermal insulation (38) and thus preferably on the front side of the activating element (61)

7. Temperature regulating device according to one of Claims 1 to 6,
**characterised in that**
the activating element (61) and/or the housing (40) accommodating it is arranged coaxially in relation to the valve (20).

8. Temperature regulating device according to one of Claims 1 to 7,
**characterised in that**
the heating device (29) comprises an electrical heating element, in particular a resistance heating element, PTC element or the like.

9. Temperature regulating device according to one of Claims 1 to 8,
**characterised in that**
one connection (41) of the housing (40) is provided for the inlet and the other connection (42) for the outlet of the diverted cooling agent.

10. Temperature regulating device according to one of Claims 1 to 9,
**characterised in that**
the valve (20) is designed as a thermostat valve.

## Revendications

1. Dispositif de régulation de la température du fluide de refroidissement de moteurs à combustion interne (10), comportant une conduite d'aller (15) conduisant le fluide du moteur à combustion interne (10) au radiateur (12), une conduite de retour (17) ramenant le fluide du radiateur (12) au moteur à combustion interne (10) et une conduite de dérivation (19) reliant ces deux conduites (15, 17), une vanne (20) commandant la circulation de fluide de refroidissement du moteur à combustion interne (10) dans la conduite de dérivation (19) et/ou dans le radiateur (12) avec retour au moteur à combustion interne (10) et dont le corps est raccordé à la conduite de dérivation (19) et à la conduite d'aller (15) ou la conduite de retour (17), et un servomoteur (24) qui commande la vanne (20), présente un capteur saisissant la température du fluide de refroidissement dans la conduite d'aller (15) ou la conduite de retour (17), pouvant être soumis à l'action de celle-ci et pouvant être chauffé au moyen d'un dispositif de chauffage (29), et fait bloc avec ce capteur en formant avec lui un élément d'actionnement (61) fonctionnant en fonction de la température qui est un élément à matière dilatable et présente un corps (51) et, à l'intérieur de ce corps (51), une matière se dilatant en s'échauffant dans laquelle plonge un piston (25) qui peut sortir du corps (51) en cas d'élévation de la température de la matière dilatable,
caractérisé en ce qu'il est prévu un corps (40) dans lequel est placée au moins une partie de la partie sensible (51) pouvant être soumise à l'action de la température du fluide de refroidissement de l'élément d'actionnement (61) et qui peut être raccordé au moyen de deux raccords (41, 42) à une conduite séparée (60) qui dérive le fluide de refroidissement de la conduite d'aller (15) ou de la conduite de retour (17) et s'étend pour cela en dérivation, que le corps (40) contient un espace annulaire (39) qui communique avec la conduite séparée (60) et entoure au moins une partie de la partie sensible (51) pouvant être soumise à l'action de la température du fluide de refroidissement de l'élément d'actionnement (61), qu'une partie (54) ne pouvant pas être soumise à l'action du fluide de refroidissement de la partie sensible (51) de l'élément d'actionnement (61) fait saillie du corps (40) et sur cette partie saillante (54) est monté le dispositif de chauffage (29), et qu'à l'arrêt du dispositif de chauffage (29), le capteur de l'élément d'actionnement (61) est refroidi par le courant comparativement plus froid de fluide de refroidissement dans la conduite séparée (60) et dans l'espace annulaire (39) du corps (40).

2. Dispositif de régulation de température selon la revendication 1, caractérisé en ce que la partie (54) saillant du corps (40) de la partie sensible (51) de l'élément d'actionnement (61) présente une isolation thermique (38).

3. Dispositif de régulation de température selon la revendication 2, caractérisé en ce que la partie (54) saillant du corps (40), avec le dispositif de chauffage (29), est entourée par cette isolation (38).

4. Dispositif de régulation de température selon l'une des revendications 1 à 3, caractérisé en ce que le dispositif de chauffage (29) est relié à un dispositif de commande (26) et est mis en marche et arrêté par celui-ci suivant les besoins en fonction de différentes grandeurs de champ caractéristique.

5. Dispositif de régulation de température selon l'une des revendications 1 à 4, caractérisé en ce que la partie mobile, par exemple un piston (25), de l'élément d'actionnement (61) est reliée à la vanne (20), en particulier à une tige de celle-ci, et produit une translation de celle-ci.

6. Dispositif de régulation de température selon l'une des revendications 2 à 5, caractérisé en ce que le dispositif de chauffage (29) est placé à l'intérieur de l'isolation thermique (38) et de préférence sur le côté frontal de l'élément d'actionnement (61).

7. Dispositif de régulation de température selon l'une des revendications 1 à 6, caractérisé en ce que l'élément d'actionnement (61) et/ou le corps (40) le recevant est placé coaxialement à la vanne (20).

8. Dispositif de régulation de température selon l'une des revendications 1 à 7, caractérisé en ce que le dispositif de chauffage (29) présente un élément chauffant électrique, en particulier une résistance chauffante, un élément à coefficient de température positif ou un élément semblable.

9. Dispositif de régulation de température selon l'une des revendications 1 à 8, caractérisé en ce qu'un raccord (41) du corps (40) est prévu pour l'arrivée du fluide de refroidissement dérivé et l'autre raccord (42) prévu pour le départ de celui-ci.

10. Dispositif de régulation de température selon l'une des revendications 1 à 9, caractérisé en ce que la vanne (20) est une vanne thermostatique.
